# EUROPÄISCHE PATENTSCHRIFT

(11) **EP 1 728 660 B1**
(45) Veröffentlichungstag und Bekanntmachung des Hinweises auf die Patenterteilung: **03.10.2007**
(21) Anmeldenummer: 06113788.1
(22) Anmeldetag: 11.05.2006
(51) Int. Cl.: B60H 1/00

(54) **Vorrichtung zur Betätigung von Baugruppen, die ein Gehäuse mit einem Walzenkörper aufweisen**
Device for operating an assembly comprising a roll body
Dispositif de commande pour une installation comprenant un cylindre

(30) Priorität: 03.06.2005 DE 102005025532
(43) Veröffentlichungstag der Anmeldung: 06.12.2006
(73) Patentinhaber: Dr. Schneider Kunststoffwerke GmbH, 96317 Kronach-Neuses (DE)
(72) Erfinder: Uhlenbusch, Olaf, 96275 Marktzeuln (DE); Knorr, Frank, 96279 Weidhausen (DE); Foertsch, Thorsten, 96328 Kueps (DE); Witzgall, Michael, 96328 Kueps (DE)
(74) Vertreter: Kinnstätter, Klaus

(56) Entgegenhaltungen:
- DE-A1- 3 707 397
- DE-A1- 19 941 960
- US-A- 5 152 187

## Beschreibung

Die Erfindung betrifft eine Vorrichtung zur Betätigung von Baugruppen, insbesondere für in einer Fahrgastzelle von Kraftfahrzeugen zu montierende Baugruppen, bei denen in einem Gehäuse ein Walzenkörper angeordnet ist mit den im Oberbegriff des Anspruchs 1 angegebenen Merkmalen.

Kraftfahrzeuge weisen verschiedenartige Baugruppen auf, die primär für den Fahrkomfort relevant und vom Nutzer manuell betätigbar sind. Dies betrifft beispielsweise Cupholder zur Aufnahme von Getränkedosen und Trinkflaschen oder in der Armaturentafel montierte Luftdüsen zur Klimatisierung der Fahrgastzelle.

Ein diesbezüglicher Cupholder kann gemäß DE 90 06 776 U1 als Teil eines im Fahrzeug angeordneten Aufbewahrungssystems für Tonbandkassetten ausgestaltet werden. Dieser Cupholder weist einen federbelasteten Schieber auf, der im geöffneten Zustand zwei Ausnehmungen zur Aufnahme von jeweils einer Getränkedose freigibt.

Ein weiterer Cupholder für Kraftfahrzeuge ist aus DE 44 04 078 A1 bekannt. Hierbei ist ein zusammenklappbarer Haltering vorgesehen, der aus zwei Hälften besteht, die über Drehgelenke miteinander verbunden sind und aus einer vertikalen zusammengeklappten Stellung in eine horizontale Haltestellung bewegt werden können. Beim Wechsel zwischen der vertikalen Ruhestellung und der horizontalen Aufnahmestellung ist allerdings ein aufwendiger Bewegungsablauf notwendig, der zahlreiche Einzelteile mit komplizierter Kontur erfordert.

Während Cupholder oftmals zwischen lediglich zwei Positionen verlagerbar sind, können Luftdüsen überwiegend in unterschiedlichen Positionen ausgerichtet werden. Dies wird beispielsweise mit einem Walzenkörper realisiert, der in einem Gehäuse drehbeweglich abgestützt ist und Lamellen zur Luftführung aufweist. So beschreibt DE 102 56 619 B3 ein Klimagerät für Fahrzeuge, bei dem die Luftaustrittsöffnungen zur Fahrgastzelle mit einem walzenförmigen Schieber regelbar sind.

Gegenstand von DE 20 2004 006 257 U1 ist eine Lamellenanordnung für eine Luftdüse zum Ableiten des aus einem Luftdüsengehäuse austretenden Luftstroms. Diese Lamellenanordnung besteht aus mehreren Lamellen, die auf einer gemeinsamen Welle befestigt sind und einen Walzenkörper bilden, der mit einem Rotationsantrieb verdrehbar ist. Als Rotationsantrieb kann beispielsweise ein Stellrad drehfest auf der Welle befestigt werden. Dieses Stellrad ragt mit seiner Umfangskontur teilweise aus einer Ausnehmung vom Luftdüsengehäuse, so dass der Nutzer das Stellrad manuell betätigen kann. Durch Betätigung des Stellrades und die folglich bewirkte Drehung der Welle wird der Walzenkörper mit den Lamellen in unterschiedliche Strömungspositionen bezüglich der vorderseitigen Luftaustrittsöffnung gebracht. Somit kann die Ausströmrichtung der Luft durch einfaches Verdrehen des Walzenkörpers verändert werden.

DE 3707397 zeigt eine Vorrichtung gemäß dem Oberbegriff des Anspruchs 1.

Unabhängig von der jeweils konkreten Ausgestaltung der Luftdüsen, Cupholder oder ähnlichen Baugruppen ist eine lagestabile Anordnung in der vom Nutzer ausgewählten Position problematisch. So wird die Stellung des Walzenkörpers einer Luftdüse oftmals unbeabsichtigt verändert, sofern der Nutzer einen Schieber oder ein ähnliches Bauteil betätigt, um die räumliche Ausrichtung der Lüftungslamellen zu ändern. Neben solchen vom Nutzer verursachten Lageänderungen kann sich die Position des Walzenkörpers auch durch Einflüsse von Fahrbahnoberfläche (z.B. Fahrt über Kopfsteinpflaster) oder Fahrzustand (z.B. Motordrehzahlen im Resonanzbereich) selbsttätig und somit ungewollt verändern.

Aufgabe der Erfindung ist es, eine Vorrichtung zur Betätigung von Baugruppen in Kraftfahrzeugen zu schaffen, mit der ein Walzenkörper in unterschiedliche Positionen verlagerbar und in jeweils ausgewählten Positionen lagestabil arretierbar ist.

Diese Aufgabe wird gelöst durch Ausgestaltung einer Vorrichtung gemäß den Merkmalen des Anspruchs 1. Vorteilhafte Ausgestaltungen sind Gegenstand der abhängigen Ansprüche, deren technische Merkmale und Wirkungen im Ausführungsbeispiel näher beschrieben werden.

Bei einer erfindungsgemäß ausgestalteten Vorrichtung ist zwischen dem Bedienrad und dem Walzenkörper eine lösbare Wirkverbindung ausgestaltet, wobei am Bedienrad abgestützte Bauteile oder das Bedienrad an sich in definierten Positionen lagefixiert angeordnet und in einer rechtwinklig zur Längsachse des Walzenkörpers verlaufenden Ebene sowie gegen die Kraft von Federelementen derart verlagerbar sind bzw. ist, dass infolge einer Kraftbeaufschlagung der am Bedienrad abgestützten Bauteile oder des Bedienrades eine kraft- und/oder formschlüssige Verbindung zwischen Bedienrad und Walzenkörper herstellbar ist, in deren Folge der Walzenkörper verdreht wird und wobei mit nachlassender Kraftbeaufschlagung die kraft- und/oder formschlüssige Verbindung wieder getrennt wird, indem die am Bedienrad abgestützten Bauteile oder das Bedienrad mittels der Federelemente zunehmend zurück verlagert werden und schließlich erneut in eine lagefixierte Position einrasten.

Das Bedienrad kann hierbei einen kreisringförmigen Grundkörper aufweisen, der im Bereich seines äußeren und inneren Umfangs mit jeweils einer umlaufenden und zur Kreisringfläche rechtwinklig angeordneten Stegkontur ausgestaltet ist.

Dabei sind in einer ersten Variante über die äußere Stegkontur am Bedienrad verteilt mehrere Ausnehmungen ausgestaltet, in denen jeweils eine Taste geführt ist. Jeder Taste ist an einem zur äußeren Stegkontur gegenüberliegenden Innenabschnitt eine Feder zugeordnet, die mit ihrem entgegengesetzt angeordneten Abschnitt an der inneren Stegkontur des Bedienrades abgestützt ist. Bei dieser Ausführung wird die Indexierung des verdrehbaren Walzenkörpers in einer fest definierten Position also über mehrere ein- bzw. ausrückbare Tasten realisiert. Infolge der Federbeaufschlagung rasten diese Tasten bei nachlassendem Druck wieder in die fixierte Position ein. Gleichzeitig wird durch die Federbeaufschlagung - wie auch bei den weiteren Varianten - ein Drehmoment beim Weitertakten von einer Stellung in die nächste Stellung erzeugt. Dieses Drehmoment ist vorteilhaft für den Nutzer, dem somit ein gleichmäßiges und anmutiges Bediengefühl vermittelt wird, welches eine intuitive Handhabung gewährleistet. Für eine zweifelsfreie Bedienung können die Tasten ferner mittels Tamponierung oder Laserung mit einem Symbol "PUSH" gekennzeichnet werden.

In einer zweiten Variante wird an der Innenseite der am inneren Umfang des Bedienrades ausgestalteten Stegkontur ein Backen geführt, dem ebenfalls eine Feder zugeordnet ist. Hierbei lässt sich das gesamte Bedienrad um einen definierten Weg durchdrücken. Gegen die Federkraft des Backens federt es bei nachlassendem Druck zurück in die fixierte Position. Dies funktioniert, weil die Lagerstelle des Bedienrades in einem etwas größeren Lagerdurchmesser des Gehäuses geführt wird. Das Durchdrücken des Bedienrades findet sich auch in dessen Kopplung zum Walzenkörper in einer Langlochkontur wieder. Mit einer solchen Variante können gegenüber der ersten Variante die notwendigen Einzelteile reduziert werden. Weiterhin wird die Ergonomie etwas verbessert, weil aus der Kontur des Bedienrades keine Tasten hervorstehen.

In einer dritten Variante weist das Bedienrad einen kreisscheibenförmigen Grundkörper auf, an dessen dem Gehäuse zugeordneter Innenseite eine Adapterscheibe abgestützt ist. Das Bedienrad wirkt somit funktionell ähnlich wie eine "Schwungscheibe", wobei eine Mitkopplung zu der sich um die Längsachse des Walzenkörpers drehenden Adapterscheibe mit einem definierten Freigang vorhanden ist. In der Adapterscheibe ist eine kreisbogenförmige Aussparung ausgestaltet, die mit einem Riegel in Wirkverbindung steht, der mit einem Vorsprung in dieser Aussparung und mit einem flächigen Abschnitt in einer am Gehäuse ausgestalteten Kulisse geführt ist. Der Riegel übernimmt die Fixierung in der jeweils gewünschten Endstellung. Bei dieser Variante lässt sich das gesamte Bedienrad - und mit diesem der Riegel - ebenfalls um einen definierten Weg durchdrücken. Auch bei dieser Variante ergeben sich gegenüber der ersten Variante weniger Einzelteile und eine etwas bessere Ergonomie. Gegenüber der zweiten Variante ergeben sich etwas einfachere Konturen, so dass der Herstellungs- und Kostenaufwand reduziert werden kann. Allerdings sollte die jeweilige Variante unter Beachtung der konkreten Einsatzbedingungen ausgewählt werden, wobei die erste Variante aufgrund einer sehr exakten Führung des Bedienrades sowie der eindeutigen und intuitiven Tastenbetätigung höchsten Nutzeranforderungen gerecht wird.

Unabhängig von der jeweils konkreten Ausführung wird mit dieser technischen Lösung eine Vorrichtung geschaffen, mit der ein Walzenkörper mit geringem Bauteilaufwand und einfacher Handhabung in unterschiedliche Positionen verlagert und in ausgewählten Positionen lagestabil arretiert werden kann. Somit wird der verdrehbare Walzenkörper in einer fest definierten Position gehalten, so dass z.B. bei der Fahrt über Kopfsteinpflaster oder beim Betätigen der Lamellen einer Lüftungsdüse dieser Walzenkörper in der jeweils ausgewählten Position stehen bleibt.

Für das Weitertakten des Walzenkörpers sind unterschiedliche Taktzahlen möglich. Als eine bevorzugte Ausführung wird unter Beachtung funktioneller und fertigungstechnischer Aspekte jedoch vorgeschlagen, dass der Walzenkörper in vier Stellungen lagefixierbar ist. Demzufolge könnte bei einer Anwendung für Lüftungsdüsen ein Walzenkörper mit integrierten Luftleitlamellen jeweils in einer direkten und indirekten Ausströmstellung sowie in zwei Verschlussstellungen lagefixiert werden.

Die beschriebene Vorrichtung ist grundsätzlich zur Betätigung von verschiedenartigen Baugruppen geeignet, bei denen in einem Gehäuse ein verdrehbarer Walzenkörper angeordnet ist. Eine bevorzugte Anwendung sind Fahrgastzellen von Kraftfahrzeugen, bei denen der Fahrzeugführer unter Beachtung individueller Wünsche Einstellungen vornimmt, beispielsweise an einer Lüftungsdüse, einem Bedienfeld oder einem multifunktionalen Ablagesystem. Diese Baugruppen können mit der Vorrichtung in jeweils unterschiedliche Funktionsabschnitte weitergetaktet werden.

Nachfolgend wird die Erfindung anhand der Zeichnung ergänzend erläutert. Es zeigen:
- Fig. 1: den grundsätzlichen Aufbau einer ersten Ausführung der erfindungsgemäßen Vorrichtung in Explosivdarstellung,
- Fig. 2: die in Fig. 1 dargestellte Vorrichtung in Seitenansicht in Schnittdarstellung in einer ersten Stellung der Betätigungselemente,
- Fig. 3: die in Fig. 1 dargestellte Vorrichtung in Seitenansicht in Schnittdarstellung in einer zweiten Stellung der Betätigungselemente,
- Fig. 4: die in Fig. 1 dargestellte Vorrichtung in perspektivischer Ansicht in einer ersten Stellung des Walzenkörpers,
- Fig. 5: die in Fig. 1 dargestellte Vorrichtung in perspektivischer Ansicht in einer zweiten Stellung des Walzenkörpers,
- Fig. 6: die in Fig. 1 dargestellte Vorrichtung in perspektivischer Ansicht in einer dritten Stellung des Walzenkörpers
- Fig. 7: den grundsätzlichen Aufbau einer zweiten Ausführung der erfindungsgemäßen Vorrichtung in Explosivdarstellung,
- Fig. 8: die in Fig. 7 dargestellte Vorrichtung in Seitenansicht in Schnittdarstellung in einer ersten Stellung der Betätigungselemente,
- Fig. 9: die in Fig. 7 dargestellte Vorrichtung in Seitenansicht in Schnittdarstellung in einer zweiten Stellung der Betätigungselemente,
- Fig. 10: die in Fig. 7 dargestellte Vorrichtung in perspektivischer Ansicht in einer ersten Stellung des Walzenkörpers,
- Fig. 11: die in Fig. 7 dargestellte Vorrichtung in perspektivischer Ansicht in einer zweiten Stellung des Walzenkörpers,
- Fig. 12: die in Fig. 7 dargestellte Vorrichtung in perspektivischer Ansicht in einer dritten Stellung des Walzenkörpers,
- Fig. 13: den grundsätzlichen Aufbau einer dritten Ausführung der erfindungsgemäßen Vorrichtung in Explosivdarstellung,
- Fig. 14: eine Teilansicht aus Fig. 13 mit Darstellung des Riegels in Eingriffsposition,
- Fig. 15: ein Bedienrad mit zugeordneter Adapterscheibe in perspektivischer Ansicht,
- Fig. 16: die in Fig. 13 dargestellte Vorrichtung in perspektivischer Ansicht in Einbaulage und in einer ersten Stellung des Walzenkörpers,

- Fig. 17: die in Fig. 13 dargestellte Vorrichtung in perspektivischer Ansicht in Einbaulage und in einer zweiten Stellung des Walzenkörpers,
- Fig. 18 - 21: ein Gehäuse mit einem Walzenkörper in verschiedenen Stellungen mit unterschiedlichen Funk tionsflächen im Bereich der Gehäuseöffnung,
- Fig. 22: einen Walzenkörper mit Funktionsflächen gemäß den Fig. 18 bis 21 in Seitenansicht in Schnittdarstellung und
- Fig. 23 - 26: weitere Ausführungen von Walzenkörpern mit unterschiedlichen Funktionsflächen in verschiedenen Stellungen im Bereich der Gehäuseöffnung.

Die in der Zeichnung dargestellte Vorrichtung ist zur Betätigung von Baugruppen geeignet, die einen Walzenkörper 1 aufweisen, der in einem Gehäuse 2 angeordnet ist. Das Gehäuse 2 wird vorderseitig von einem Rahmen 21 abgeschlossen, in dem eine Öffnung 22 ausgestaltet ist. Der Walzenkörper 1 ist im Gehäuse 2 derart angeordnet, dass durch Verdrehen des Walzenkörpers 1 die Relativposition zwischen unterschiedlichen Funktionsabschnitten des Walzenkörpers 1 und der Öffnung 22 veränderbar ist.

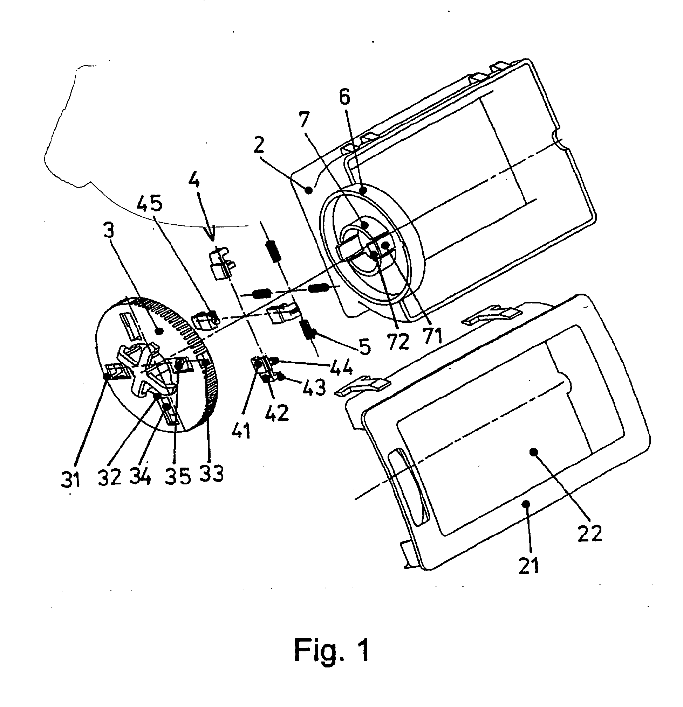

Die Vorrichtung weist ein Bedienrad 3 auf, das in den Ausführungen der Fig. 1 bis Fig. 12 jeweils einen kreisringförmigen Grundkörper umfasst. Am Bedienrad 3 sind im Bereich des äußeren und inneren Umfangs jeweils umlaufende Stegkonturen 31 bzw. 32 ausgestaltet, die rechtwinklig zur kreisringförmigen Fläche des Grundkörpers vom Bedienrad 3 angeordnet sind.

Bei der Ausführung gemäß Fig. 1 bis Fig. 6 sind am Bedienrad 3 über die äußere Stegkontur 31 verteilt mehrere Ausnehmungen 33 ausgestaltet. In diesen Ausnehmungen 33 wird jeweils eine Taste 4 geführt, der an einem zur äußeren Stegkontur 31 gegenüberliegenden Innenabschnitt eine Feder 5 zugeordnet ist. Mit dem entgegengesetzt angeordneten Abschnitt ist die Feder 5 an der inneren Stegkontur 32 des Bedienrades 3 abgestützt.

Die Taste 4 weist in radialer Ausrichtung des Bedienrades 3 zwei zueinander höhenversetzte Abschnitte 41 und 42 auf. Hierbei ist der höhere dieser Abschnitte, also der Abschnitt 41 in einer Aussparung 34 des Bedienrades 3 geführt. Weiterhin weist die Taste 4 in axialer Ausrichtung des Bedienrades 3 zwei annähernd parallel zur äußeren Stegkontur 31 des Bedienrades 3 verlaufende und zueinander beabstandete flächige Abschnitte 43 und 44 auf. Der äußere Abschnitt 43 ist vollflächig ausgestaltet. Hingegen weist der innere Abschnitt 44 einen Durchbruch 45 auf, in dem die Feder 5 mit ihrer Außenkontur abstützbar ist. Ferner ist an der zur äußeren Stegkontur 31 gerichteten Innenseite der inneren Stegkontur 32 des Bedienrades 3 ein Vorsprung 35 ausgestaltet, an dem die Innenkontur der Feder 5 abstützbar ist.

Das Gehäuse 2 weist zwei im wesentlichen zylinderförmige und in Richtung der Längsachse des Walzenkörpers 1 verlaufende Stegkonturen 6 und 7 auf. Die äußere Stegkontur 6 ist als Führung für die äußere Stegkontur 31 des Bedienrades 3 und die innere Stegkontur 7 ist als Lagerung für den Walzenkörper 1 ausgestaltet. Zwischen der Innenfläche der inneren Stegkontur 7 des Gehäuses 2 und einem am Walzenkörper 1 ausgestalteten Lagerzapfen verbleibt ein radialer Abstand, der infolge einer von einer Taste 4 ausgelösten Kraftbeaufschlagung überbrückbar ist.

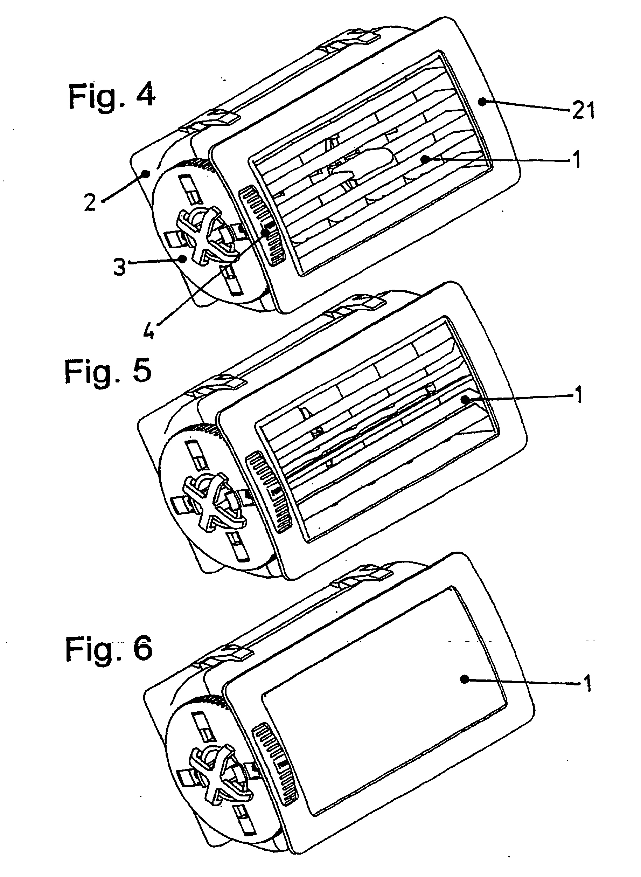

Im Bereich der inneren Stegkontur 7 sind zumindest zwei Segmente 71 mit einer federnden Clipkontur ausgestaltet, die an dem zum Gehäuse 2 entgegengesetzt angeordneten Abschnitt jeweils einen Vorsprung 72 aufweisen. In der Ausführung gemäß Fig. 1 sind zwei diesbezügliche Clipsegmente 71 mit einem Vorsprung 72 vorgesehen. Über diese Clipsegmente 71 und ihren Vorsprung 72 wird eine Rastverbindung zwischen dem Gehäuse 2 und dem Bedienrad 3 geschaffen, wobei eine entsprechende Anordnung aus Fig. 4 bis Fig. 6 ersichtlich ist.

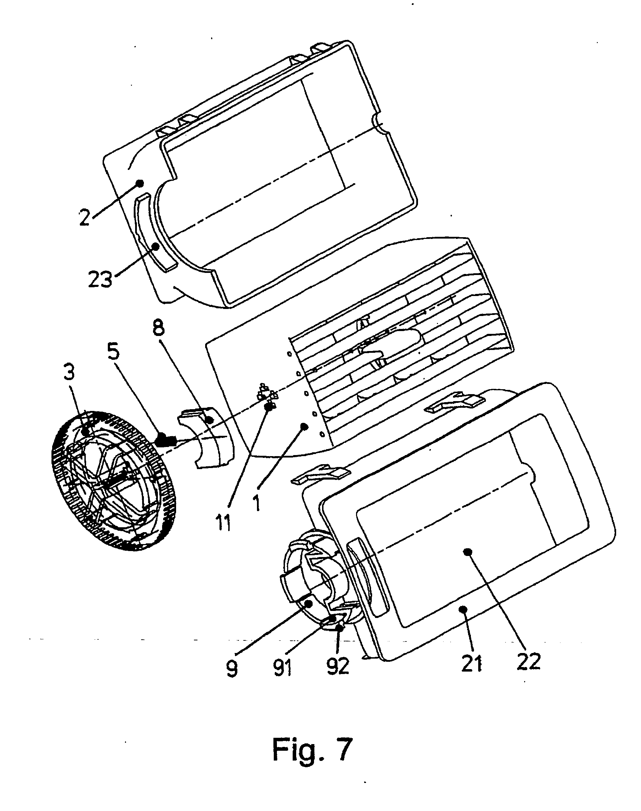

Die Ausführung gemäß Fig. 7 bis Fig. 12 weist im Gegensatz zur bisher beschriebenen Variante am Bedienrad 3 keine Ausnehmungen für eine Taste auf. Vielmehr wird an der Innenseite der am inneren Umfang des Bedienrades 3 ausgestalteten Stegkontur 32 ein Backen 8 geführt. Auch dieser Backen 8 ist federbelastet, indem an seinem zur Stegkontur 32 gegenüberliegenden Innenabschnitt eine Feder 5 angreift.

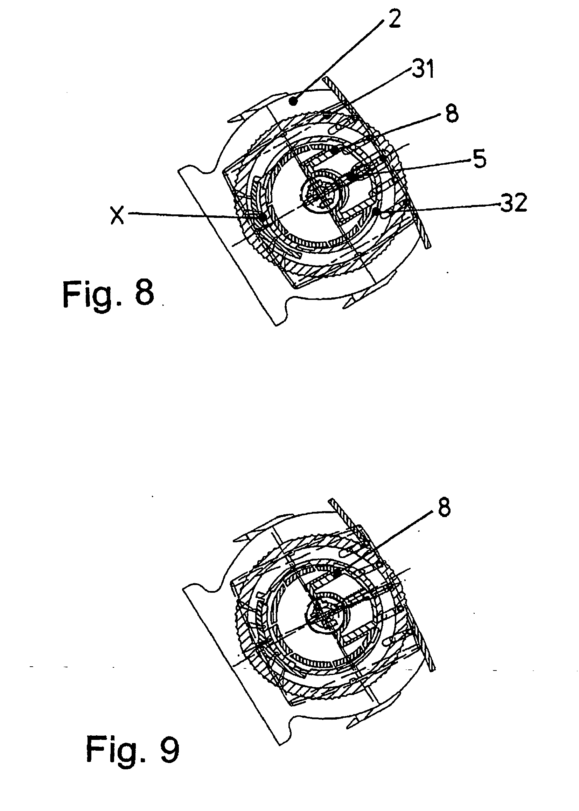

Am Gehäuse 2 ist eine in Richtung der Längsachse des Walzenkörpers 1 verlaufende Stegkontur 9 ausgestaltet. Diese Stegkontur 9 hat in einem ersten Abschnitt - der zum Rahmen 21 des Gehäuses 2 ausgerichtet ist - eine zur zugeordneten Kontur des Backens 8 weitgehend kongruente Kontur. In einem zweiten Abschnitt - der sich dem mit dem Backen 8 in Wirkverbindung stehenden Abschnitt anschließt - weist die Stegkontur 9 eine im wesentlichen teilzylinderförmige Kontur auf. Hierbei sind die jeweils inneren Bereiche dieser Abschnitte als Lagerung für den Walzenkörper 1 ausgestaltet. Zwischen der Innenfläche der Stegkontur 9 des Gehäuses 2 und einem am Walzenkörper 1 ausgestalteten Lagerzapfen verbleibt ein radialer Abstand, der infolge einer vom Bedienrad 3 über den Backen 8 ausgelösten Kraftbeaufschlagung überbrückbar ist. Dieser Abstand ist aus Fig. 8 ersichtlich und mit einem "X" bezeichnet. Fig. 9 zeigt eine Stellung, in welcher der Abstand "X" infolge einer vorstehend beschriebenen Kraftbeaufschlagung nicht mehr vorhanden ist.

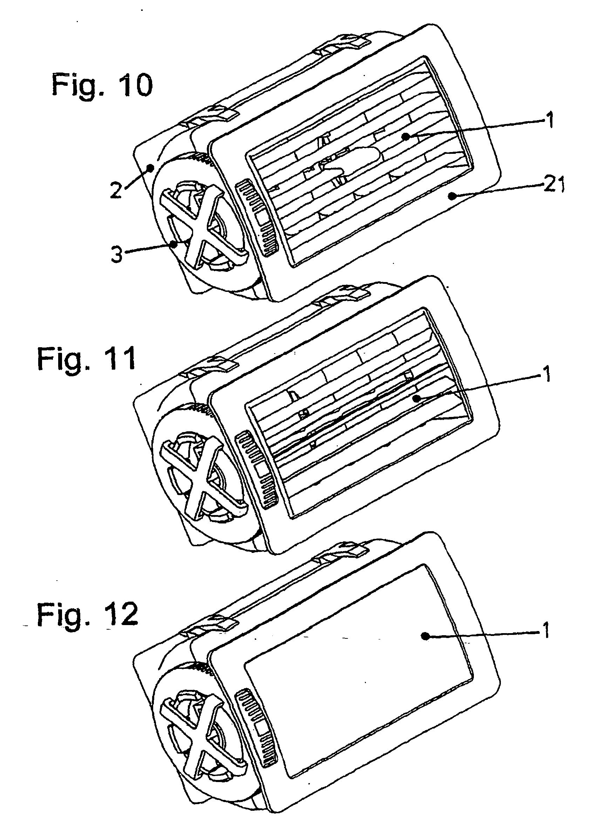

Im Bereich des zweiten Abschnittes mit der im wesentlichen teilzylinderförmigen Kontur sind zumindest zwei Segmente 91 mit einer federnden Clipkontur ausgestaltet, die an dem zum Gehäuse 2 entgegengesetzt angeordneten Abschnitt jeweils einen Vorsprung 92 aufweisen. In der Ausführung gemäß Fig. 7 sind drei diesbezügliche Clipsegmente 91 mit einem Vorsprung 92 vorgesehen. Über diese Clipsegmente 91 und ihren Vorsprung 92 wird eine Rastverbindung zwischen dem Gehäuse 2 und dem Bedienrad 3 geschaffen, wobei eine entsprechende Anordnung aus Fig. 10 bis Fig. 12 ersichtlich ist.

Das Gehäuse 2 weist gemäß Fig. 7 an der dem Bedienrad 3 zugeordneten Seitenfläche einen Anschlag 23 auf, der die maximal mögliche Verlagerung der am inneren Umfang des Bedienrades 3 ausgestalteten Stegkontur 32 begrenzt. Weiterhin sind an der dem Bedienrad 3 zugeordneten Seitenfläche des Walzenkörpers 1 mehrere Durchbrüche 11 vorgesehen, in denen das Bedienrad 3 mittels zapfenförmiger Vorsprünge abstützbar ist. Diese Durchbrüche 11 sind als Langlöcher in einer rechtwinklig zur Längsachse des Walzenkörpers 1 verlaufenden Ebene ausgestaltet.

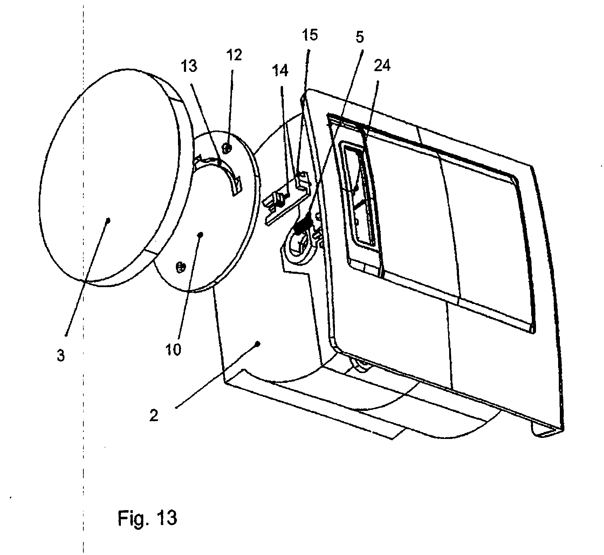

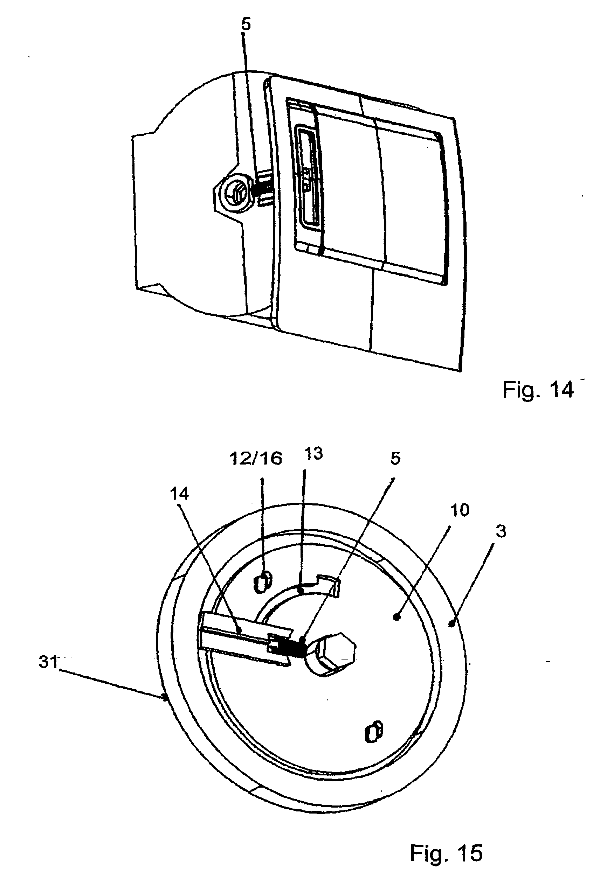

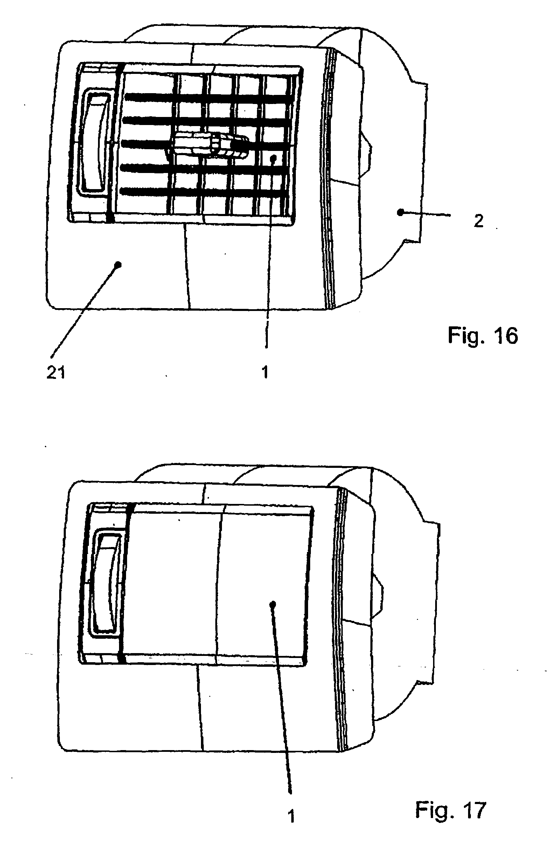

Bei der Ausführung gemäß Fig. 13 bis Fig. 17 weist das Bedienrad 3 einen kreisscheibenförmigen Grundkörper auf, der im Bereich seines äußeren Umfangs mit einer umlaufenden und zur Kreisscheibenfläche rechtwinklig angeordneten Stegkontur 31 ausgestaltet ist. An der dem Gehäuse 2 zugeordneten Innenseite des Bedienrades 3 ist eine Adapterscheibe 10 abgestützt. Die Verbindung zwischen dem Bedienrad 3 und der Adapterscheibe 10 ist unter Ausbildung zapfenförmiger Vorsprünge 16 und zugeordneter Durchbrüche 12 derart ausgestaltet, dass die Relativposition zwischen dem Bedienrad 3 und der Adapterscheibe 10 zumindest geringfügig veränderbar ist.

In der Adapterscheibe 10 ist eine kreisbogenförmige Aussparung 13 ausgestaltet, die an ihren beiden Endabschnitten jeweils einen Rastvorsprung aufweist. Die Aussparung 13 steht mit einem Riegel 14 in Wirkverbindung. Der Riegel 14 wird mit einem Vorsprung 15 in der Aussparung 13 geführt und mit einem flächigen Abschnitt in einer am Gehäuse 2 ausgestalteten Kulisse 24. Weiterhin ist der flächige Abschnitt des Riegels 14 unter Zwischenschaltung einer Feder 5 mit einem Lagerzapfen des Walzenkörpers 1 verbindbar.

Unabhängig von der konkreten Konstruktion ist bei den beschriebenen Ausführungen eine lösbare Wirkverbindung zwischen dem Bedienrad 3 und dem Walzenkörper 1 vorgesehen. Hierbei sind am Bedienrad 3 abgestützte Bauteile (z.B. Tasten 4) oder das Bedienrad 3 selbst in definierten Positionen lagefixiert angeordnet sowie in einer rechtwinklig zur Längsachse des Walzenkörpers 1 verlaufenden Ebene und gegen die Kraft von Federn 5 derart verlagerbar, dass infolge einer Kraftbeaufschlagung eine kraft- und/oder formschlüssige Verbindung zwischen Bedienrad 3 und Walzenkörper 1 herstellbar ist. Dadurch wird zunächst der Walzenkörper 1 verdreht. Mit nachlassender Kraftbeaufschlagung wird die kraft- und/oder formschlüssige Verbindung wieder getrennt, so dass die am Bedienrad 3 abgestützten Bauteile oder das Bedienrad 3 selbst mittels der Federn 5 zunehmend zurück verlagert werden und schließlich erneut in einer lagefixierten Position einrasten. Somit können das Bedienrad 3 und der mit diesem in Wirkverbindung bringbare Walzenkörper 1 in mehreren Stellungen lagefixiert werden.

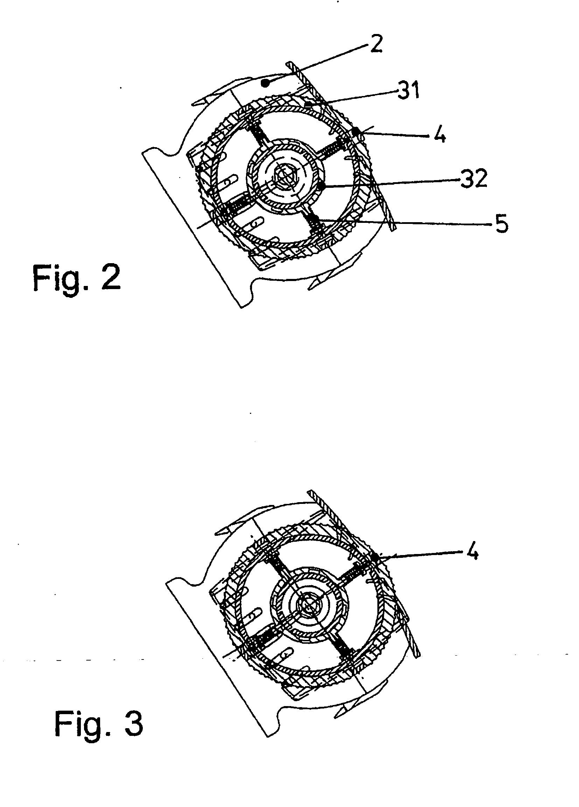

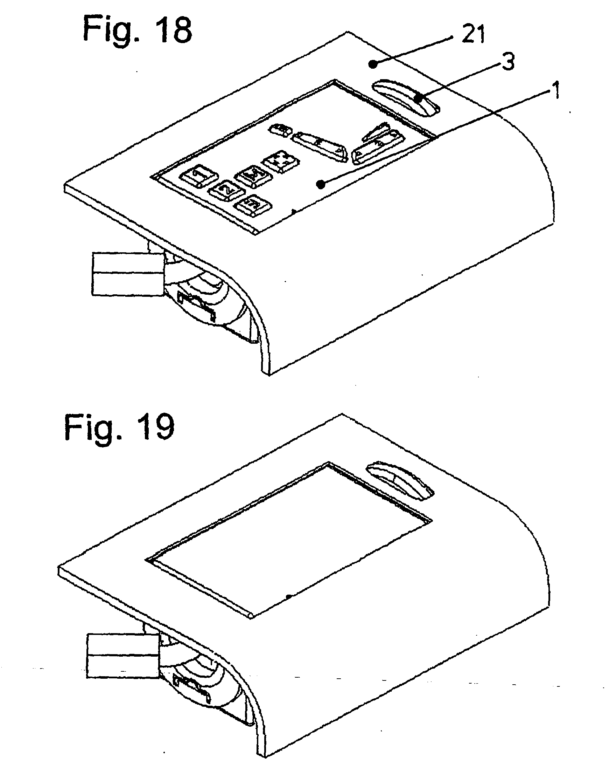

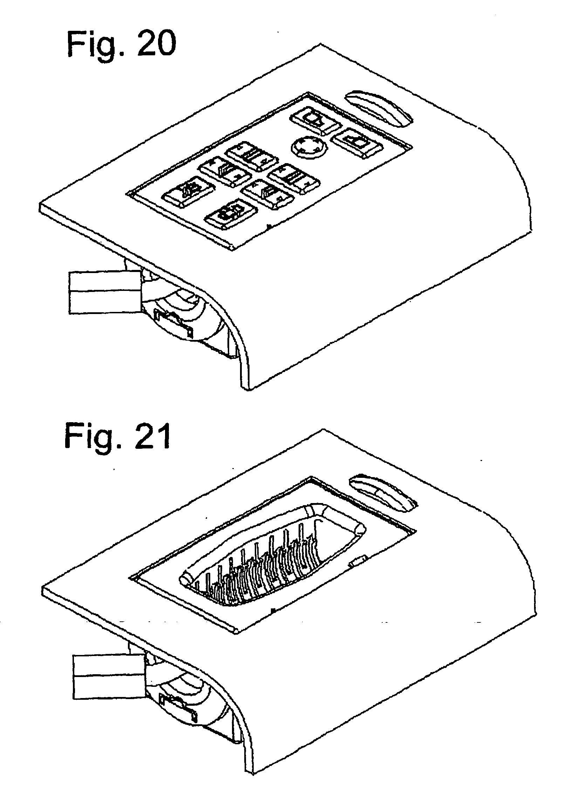

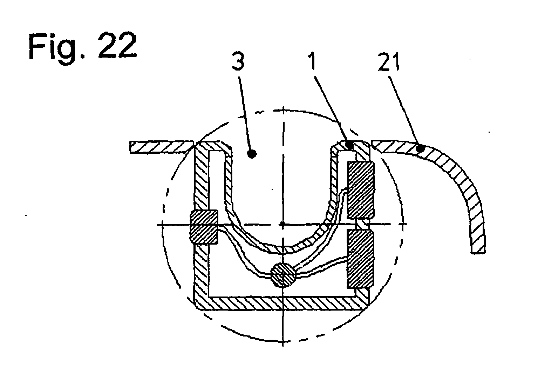

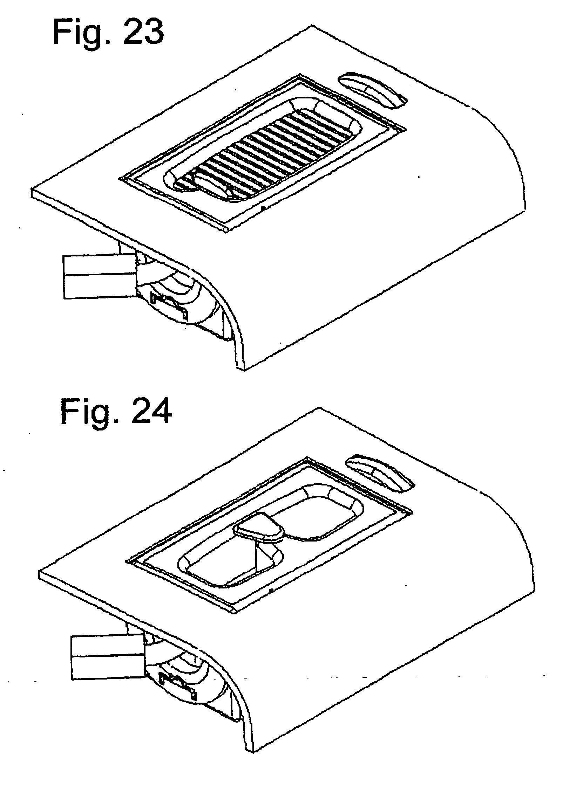

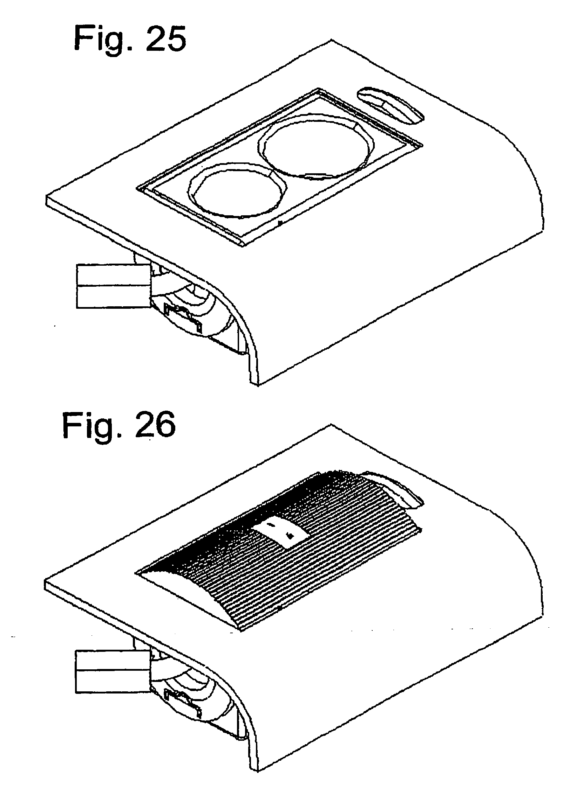

Fig. 1, Fig. 7 und Fig. 13 zeigen den grundsätzlichen Aufbau verschiedener Ausführungen. In Fig. 2 und Fig. 3 ist eine Ausführung mit Bedienrad 3 und Tasten 4 in zwei Stellungen dargestellt. Fig. 2 zeigt eine aus der Kontur des Bedienrades 3 hervorstehende Taste 4, in Fig. 3 ist die Taste 4 eingedrückt. Die gleichen Betriebszustände für eine Ausführung mit Bedienrad 3 und Backen 8 sind in Fig. 8 und Fig. 9 dargestellt. Hierbei zeigt Fig. 8 das Bedienrad 3 in hervorstehender Position und Fig. 9 die eingedrückte Position. Schließlich sind aus den perspektivischen Ansichten gemäß Fig. 4 bis Fig. 6, Fig. 10 bis Fig. 12 sowie Fig. 16 und Fig. 17 unterschiedliche Stellungen einer Lüftungsdüse mit einem Walzenkörper ersichtlich, der mit einer erfindungsgemäßen Vorrichtung betätigbar ist. In Fig. 18 bis Fig. 26 sind weitere Möglichkeiten der Ausgestaltung des Walzenkörpers 1 dargestellt, beispielsweise als Bedienfeld (Fig. 18 und 20), als Ablage (Fig. 21, 23 und 24), als Cupholder (Fig. 25), als weitere Lüftungsdüse (Fig. 26) oder auch als geschlossene Fläche (Fig. 19). Dabei zeigt Fig. 22 in Seitenansicht eine Schnittdarstellung durch einen Walzenkörper 1, der mit den vier in Fig. 18 bis Fig. 21 dargestellten Funktionsflächen ausgestattet ist.

### Bezugszeichenliste

- 1: Walzenkörper

- 2: Gehäuse
- 21: Rahmen
- 22: Öffnung
- 23: Anschlag
- 24: Kulissenführung

- 3: Bedienrad
- 31: Stegkontur, außen
- 32: Stegkontur, innen
- 33: Ausnehmung an Stegkontur
- 34: Aussparung an Grundfläche
- 35: Vorsprung für Feder
- 4: Taste
- 41: hoher Abschnitt, radial
- 42: tiefer Abschnitt, radial
- 43: flächiger Abschnitt, außen
- 44: flächiger Abschnitt, innen
- 45: Durchbruch
- 5: Feder
- 6: Stegkontur am Gehäuse, außen
- 7: Stegkontur am Gehäuse, innen
- 71: Clipsegmente
- 72: Rastverbindung
- 8: Backen
- 9: Stegkontur am Gehäuse
- 91: Clipsegmente
- 92: Rastvorsprung

- 10: Adapterscheibe
- 11: Durchbruch am Walzenkörper
- 12: Durchbruch an Adapterscheibe
- 13: kreisbogenförmige Aussparung
- 14: Riegel
- 15: Vorsprung am Riegel
- 16: zapfenförmiger Vorsprung
- X: radialer Abstand

## Patentansprüche

1. Vorrichtung zur Betätigung von Baugruppen, insbesondere für in einer Fahrgastzelle von Kraftfahrzeugen zu montierende Baugruppen, mit einem Gehäuse und einem Walzenkörper, der in dem Gehäuse (2) derart angeordnet ist, dass durch Verdrehen des Walzenkörpers (1) die Relativposition zwischen unterschiedlichen Funktionsabschnitten des Walzenkörpers und einer Öffnung im Gehäuse veränderbar ist, wobei dem Walzenkörper ein Rotationsantrieb mit einem Bedienrad zugeordnet ist, das mit seiner Umfangskontur teilweise aus einer Ausnehmung des Gehäuses ragt und vom Nutzer betätigbar ist, **dadurch gekennzeichnet, dass** zwischen dem Bedienrad (3) und dem Walzenkörper (1) eine lösbare Wirkverbindung ausgestaltet ist, wobei am Bedienrad (3) abgestützte Bauteile oder das Bedienrad (3) an sich in definierten Positionen lagefixiert angeordnet und in einer rechtwinklig zur Längsachse des Walzenkörpers (1) verlaufenden Ebene sowie gegen die Kraft von Federelementen derart verlagerbar sind bzw. ist, dass infolge einer Kraftbeaufschlagung der am Bedienrad (3) abgestützten Bauteile oder des Bedienrades (3) eine kraft- und/oder formschlüssige Verbindung zwischen Bedienrad (3) und Walzenkörper (1) herstellbar ist, in deren Folge der Walzenkörper (1) verdreht wird und wobei mit nachlassender Kraftbeaufschlagung die kraft- und/oder formschlüssige Verbindung wieder getrennt wird, indem die am Bedienrad (3) abgestützten Bauteile oder das Bedienrad (3) mittels der Federelemente zunehmend zurück verlagert werden und schließlich erneut in eine lagefixierte Position einrasten.

2. Vorrichtung nach Anspruch 1, **dadurch gekennzeichnet, dass** das Bedienrad (3) einen kreisringförmigen Grundkörper aufweist, der im Bereich seines äußeren und inneren Umfangs mit jeweils einer umlaufenden und zur Kreisringfläche rechtwinklig angeordneten Stegkontur (31; 32) ausgestaltet ist.

3. Vorrichtung nach Anspruch 2, **dadurch gekennzeichnet, dass** am Bedienrad (3) über die äußere Stegkontur (31) verteilt mehrere Ausnehmungen (33) ausgestaltet sind, in denen jeweils eine Taste (4) geführt ist, wobei dieser Taste (4) an einem zur äußeren Stegkontur (31) gegenüberliegenden Innenabschnitt eine Feder (5) zugeordnet ist, die mit ihrem entgegengesetzt angeordneten Abschnitt an der inneren Stegkontur (32) des Bedienrades (3) abgestützt ist.

4. Vorrichtung nach Anspruch 3, **dadurch gekennzeichnet, dass** die Taste (4) in radialer Ausrichtung des Bedienrades (3) zwei zueinander höhenversetzte Abschnitte (41; 42) und in axialer Ausrichtung des Bedienrades (3) zwei annähernd parallel zur äußeren Stegkontur (31) des Bedienrades verlaufende und zueinander beabstandete flächige Abschnitte (43; 44) aufweist, wobei ein radial ausgerichteter Abschnitt (41) in einer Aussparung (34) des Bedienrades (3) geführt ist und wobei von den axial ausgerichteten Abschnitten (43; 44) der äußere Abschnitt (43) vollflächig ausgestaltet ist, während der innere Abschnitt (44) einen Durchbruch (45) aufweist, in dem die Außenkontur der Feder (5) abstützbar ist.

5. Vorrichtung nach Anspruch 3, **dadurch gekennzeichnet, dass** an der zur äußeren Stegkontur (31) gerichteten Innenseite der inneren Stegkontur (32) des Bedienrades (3) ein Vorsprung (35) ausgestaltet ist, an dem die Innenkontur der Feder (5) abstützbar ist.

6. Vorrichtung nach Anspruch 3, **dadurch gekennzeichnet, dass** am Gehäuse (2) zwei im wesentlichen zylinderförmige und in Richtung der Längsachse des Walzenkörpers (1) verlaufende Stegkonturen (6; 7) ausgestaltet sind, wobei die äußere Stegkontur (6) als Führung für die äußere Stegkontur (31) des Bedienrades (3) und die innere Stegkontur (7) als Lagerung für den Walzenkörper (1) ausgestaltet ist.

7. Vorrichtung nach Anspruch 6, **dadurch gekennzeichnet, dass** im Bereich der inneren Stegkontur (7) zumindest zwei Segmente (71) mit einer federnden Clipkontur ausgestaltet sind, die an dem zum Gehäuse (2) entgegengesetzt angeordneten Abschnitt jeweils einen Vorsprung (72) aufweisen, mit dem eine Rastverbindung zwischen dem Gehäuse (2) und dem Bedienrad (3) bewirkbar ist.

8. Vorrichtung nach Anspruch 6, **dadurch gekennzeichnet, dass** zwischen der Innenfläche der inneren Stegkontur (7) des Gehäuses (2) und einem am Walzenkörper (1) ausgestalteten Lagerzapfen ein radialer Abstand (X) verbleibt, der infolge einer von einer Taste (4) ausgelösten Kraftbeaufschlagung überbrückbar ist.

9. Vorrichtung nach Anspruch 2, **dadurch gekennzeichnet, dass** an der Innenseite der am inneren Umfang des Bedienrades (3) ausgestalteten Stegkontur (32) ein Backen (8) geführt ist, dem an seinem zur Stegkontur (32) gegenüberliegenden Innenabschnitt eine Feder (5) zugeordnet ist.

10. Vorrichtung nach Anspruch 9, **dadurch gekennzeichnet, das**s am Gehäuse (2) eine in Richtung der Längsachse des Walzenkörpers (1) verlaufende Stegkontur (9) ausgestaltet ist, die in einem ersten Abschnitt eine zur zugeordneten Kontur des Backens (8) weitgehend kongruente Kontur und in einem zweiten Abschnitt eine im wesentlichen teilzylinderförmige Kontur aufweist, wobei die jeweils inneren Bereiche dieser Abschnitte als Lagerung für den Walzenkörper (1) ausgestaltet sind.

11. Vorrichtung nach Anspruch 10, **dadurch gekennzeichnet, dass** im Bereich des zweiten Abschnittes mit der im wesentlichen teilzylinderförmigen Kontur zumindest zwei Segmente (91) mit einer federnden Clipkontur ausgestaltet sind, die an dem zum Gehäuse (2) entgegengesetzt angeordneten Abschnitt jeweils einen Vorsprung (92) aufweisen, mit dem eine Rastverbindung zwischen dem Gehäuse (2) und dem Bedienrad (3) bewirkbar ist.

12. Vorrichtung nach Anspruch 10, **dadurch gekennzeichnet, dass** zwischen den Innenflächen der jeweils inneren Bereiche der Stegkontur (9) und einem am Walzenkörper (1) ausgestalteten Lagerzapfen ein radialer Abstand (X) verbleibt, der infolge einer vom Bedienrad (3) über den Backen (8) ausgelösten Kraftbeaufschlagung überbrückbar ist.

13. Vorrichtung nach Anspruch 9, **dadurch gekennzeichnet, dass** das Gehäuse (2) an der dem Bedienrad (3) zugeordneten Seitenfläche einen Anschlag (23) aufweist, der die maximal mögliche Verlagerung der am inneren Umfang des Bedienrades (3) ausgestalteten Stegkontur (32) begrenzt.

14. Vorrichtung nach Anspruch 9, **dadurch gekennzeichnet, dass** an der dem Bedienrad (3) zugeordneten Seitenfläche des Walzenkörpers (1) mehrere Durchbrüche (11) ausgestaltet sind, in denen das Bedienrad (3) mittels zapfenförmiger Vorsprünge abstützbar ist.

15. Vorrichtung nach Anspruch 14, **dadurch gekennzeichnet, dass** die Durchbrüche (11) als Langlöcher in einer rechtwinklig zur Längsachse des Walzenkörpers (1) verlaufenden Ebene ausgestaltet sind.

16. Vorrichtung nach Anspruch 1, **dadurch gekennzeichnet, dass** das Bedienrad (3) einen kreisscheibenförmigen Grundkörper aufweist, der im Bereich seines äußeren Umfangs mit einer umlaufenden und zur Kreisscheibenfläche rechtwinklig angeordneten Stegkontur (31) ausgestaltet ist, wobei an der dem Gehäuse (2) zugeordneten Innenseite des Bedienrades (3) eine Adapterscheibe (10) abgestützt ist.

17. Vorrichtung nach Anspruch 16, **dadurch gekennzeichnet, dass** die Verbindung zwischen Bedienrad (3) und Adapterscheibe (10) mittels zapfenförmiger Vorsprünge (16) und zugeordneter Durchbrüche (12) derart ausgestaltet ist, dass die Relativposition zwischen dem Bedienrad (3) und der Adapterscheibe (10) zumindest geringfügig veränderbar ist.

18. Vorrichtung nach Anspruch 16, **dadurch gekennzeichnet, dass** in der Adapterscheibe (10) eine kreisbogenförmige Aussparung (13) ausgestaltet ist, die mit einem Riegel (14) in Wirkverbindung steht, der mit einem Vorsprung (15) in dieser Aussparung (13) und mit einem flächigen Abschnitt in einer am Gehäuse (2) ausgestalteten Kulisse (24) geführt ist.

19. Vorrichtung nach Anspruch 18, **dadurch gekennzeichnet, dass** die kreisbogenförmige Aussparung (13) an ihren beiden Endabschnitten jeweils einen Rastvorsprung aufweist.

20. Vorrichtung nach Anspruch 18, **dadurch gekennzeichnet, dass** der flächige Abschnitt des Riegels (14) unter Zwischenschaltung einer Feder (5) mit einem Lagerzapfen des Walzenkörpers (1) verbindbar ist.

21. Vorrichtung nach einem der vorhergehenden Ansprüche, **dadurch gekennzeichnet, dass** das Bedienrad (3) und der mit diesem in Wirkverbindung bringbare Walzenkörper (1) in jeweils vier Stellungen lagefixierbar ist.

22. Vorrichtung nach einem der vorhergehenden Ansprüche, **dadurch gekennzeichnet, dass** die Vorrichtung einer Lüftungsdüse und/oder einem Bedienfeld und/oder einem multifunktionalen Ablagesystem zugeordnet wird.

## Claims

1. Device for actuating subassemblies, particularly for subassemblies to be mounted in a passenger compartment of motor vehicles, with a housing and a roller body, which is arranged in the housing (2) in such a manner that through rotation of the roller body (1) the relative position between different functional sections of the roller body and an opening in the housing is variable, wherein the roller body is associated with a rotational drive with an operating wheel, which projects by its circumferential profile partly out of a recess of the housing and is actuable by the user, **characterised in that** a releasable operative connection is formed between the operating wheel (3) and the roller body (1), wherein components, which are supported at the operating wheel (3), or the operating wheel (3) itself is or are arranged to be positionally fixed in defined positions and displaceable in a plane, which extends at right angles to the longitudinal axis of the roller body (1), and against the force of spring elements in such a manner that as a consequence of force loading of the components, which are supported at the operating wheel (3), or of the operating wheel (3) a force-locking and/or shape-locking connection between operating wheel (3) and roller body (1) can be produced, as a consequence of which the roller body (1) is rotated, and wherein with decreasing force loading the force-locking and shape-locking connection is separated again **in that** the components, which are supported at the operating wheel (3), or the operating wheel (3) is or are increasingly displaced back by means of the spring elements and ultimately detent again in a positionally fixed position.

2. Device according to claim 1, **characterised in that** the operating wheel (3) comprises a circularly annular base body, which is formed in the region of each of its outer and inner circumference with a respective encircling web contour (31; 32) arranged at right angles to the circularly annular surface.

3. Device according to claim 2, **characterised in that** formed at the operating wheel (3) are several recesses (33) which are distributed over the outer web contour (31) and in each of which a button (4) is guided, wherein this button (4) is associated at an inner section, which is opposite the outer web contour (31), with a spring (5) which is supported by its oppositely arranged section at the inner web contour (32) of the operating wheel (3).

4. Device according to claim 3, **characterised in that** the button (4) has in radial orientation of the operating wheel (3) two sections (41; 42), which are offset relative to one another in height, and in axial orientation of the operating wheel (3) two areal sections (43; 44), which extend approximately parallel to the outer web contour (31) of the operating wheel and which are spaced from one another, wherein one radially oriented section (41) is guided in a cut-out (34) of the operating wheel (3) and wherein of the axially oriented sections (43; 44) the outer section (43) is formed over the whole area, whilst the inner section (44) has a passage (45) in which the outer contour of the spring (5) can be supported.

5. Device according to claim 3, **characterised in that** formed at the inner side, which is directed towards the outer web contour (31), of the inner web contour (32) of the operating wheel (3) is a projection (34) at which the inner contour of the spring (45) can be supported.

6. Device according to claim 3, **characterised in that** two substantially cylindrical web contours (6; 7), which extend in the direction of the longitudinal axis of the roller body (1), are formed at the housing (2), wherein the outer web contour (6) is formed as a guide for the outer web contour (31) of the operating wheel (3) and the inner web contour (7) is formed as a mounting for the roller body (1).

7. Device according to claim 6, **characterised in that** at least two segments (71), with a resilient clip contour are formed in the region of the inner web contour (7) and have at each section arranged opposite to the housing (2) a respective projection (72) with which a detent connection between the housing (2) and the operating wheel (3) can be produced.

8. Device according to claim 6, **characterised in that** a radial spacing (X) remains between the inner surface of the inner web contour (7) of the housing (2) and a bearing pin formed at the roller body (1) and can be bridged over as a consequence of a force loading triggered by a button (4).

9. Device according to claim 2, **characterised in that** a jaw (8) is guided at the inner side of the web contour (32) formed at the inner circumference of the operating wheel (3) and is associated at its inner section opposite the web contour (32) with a spring (5).

10. Device according to claim 9, **characterised in that** a web contour (9) extending in the direction of the longitudinal axis of the roller body (1) is formed at the housing (2) and has in a first section a contour substantially congruent with the associated contour of the jaw (8) and in a second section a substantially part-cylindrical contour, wherein the respective inner regions of these sections are formed as a mounting for the roller body (1).

11. Device according to claim 10, **characterised in that** at least two segments (91) with a resilient clip contour are formed in the region of the second section with the substantially part-cylindrical contour and each have at the section arranged opposite the housing (2) a respective projection (92) by which a detent connection between the housing (2) and the operating wheel (3) can be produced.

12. Device according to claim 10, **characterised in that** a radial spacing (X) remains between the inner surfaces of the respective inner regions of the web contour (9) and a bearing pin formed at the roller body (1), the spacing being able to be bridged over as a consequence of a force loading triggered by the operating wheel (3) by way of the jaw (8).

13. Device according to claim 9, **characterised in that** the housing (2) has at the side surface associated with the operating wheel (3) an abutment (23) which limits the maximum possible displacement of the web contour (32) formed at the inner circumference of the operating wheel (3).

14. Device according to claim 9, **characterised in that** several passages (11), in which the operating wheel (3) can be supported by means of pin-like projections, are formed at the side surface of the roller body (1) associated with the operating wheel (3).

15. Device according to claim 14, **characterised in that** the passages (11) are formed as slots in a plane extending at right angles to the longitudinal axis of the roller body (1).

16. Device according to claim 1, **characterised in that** the operating wheel (3) has a circularly disc-shaped base body, which is formed in the region of its outer circumference with an encircling web contour (31) arranged at right angles to the circular disc surface, wherein an adapter disc (10) is supported at the inner side of the operating wheel (3) associated with the housing (2).

17. Device according to claim 16, **characterised in that** the connection between operating wheel (3) and adapter disc (10) is formed in such a manner by means of pin-shaped projections (16) and associated passages (12) that the relative position between the operating wheel (3) and the adapter disc (10) is variable at least slightly.

18. Device according to claim 16, **characterised in that** a circularly arcuate cut-out (13) is formed in the adapter disc (10) and disposed in operative connection with a lock (14), which is guided by a projection (15) in this cut-out (13) and by an areal section in a gate guide (24) formed at the housing (2).

19. Device according to claim 18, **characterised in that** the circularly arcuate cut-out (13) has a respective detent projection at each of its two end sections.

20. Device according to claim 18, **characterised in that** the areal section of the lock (14) is connectible with a bearing pin of the roller body (1) with interposition of a spring (5).

21. Device according to one of the preceding claims, **characterised in that** the operating wheel (3) and the roller body (1) able to be brought into operative connection therewith are positionally fixable respectively in four settings.

22. Device according to one of the preceding claims, **characterised in that** the device is associated with a ventilation nozzle and/or a control field and/or a multi-functional deposit system.

## Revendications

1. Dispositif de commande de modules, en particulier pour des modules à monter dans un habitacle de véhicules, comportant un boîtier et un corps de cylindre, qui est disposé dans le boîtier (2) de sorte que, grâce à une rotation du corps de cylindre (1), la position relative entre différents segments fonctionnels du corps de cylindre et une ouverture du boîtier peut être modifiée, dans lequel au corps de cylindre est associé un entraînement rotatif comportant une roue de commande, qui fait saillie partiellement depuis un évidement du boîtier avec son contour périphérique et peut être actionnée par l'utilisateur, **caractérisé en ce qu'**une interaction amovible est réalisée entre la roue de commande (3) et le corps de cylindre (1), dans lequel des composants supportés sur la roue de commande (3) ou la roue de commande (3) sont ou est disposé fixes en position dans des positions définies et peuvent ou peut se trouver dans un plan s'étendant perpendiculairement à l'axe longitudinal du corps de cylindre (1) ainsi que par rapport à la force d'élément élastique de sorte que, grâce à un raccord à force des composants supportés par la roue de commande (3) ou de la roue de commande, un raccord à force et/ou par emboîtement entre la roue de commande (3) et le corps de cylindre (1) peut être réalisé, à la suite de quoi le corps de cylindre (1) peut être tourné et dans lequel, grâce au raccord à force desserré, la liaison à force et/ou par emboîtement est de nouveau séparée, où les composants supportés dans la roue de commande (3) ou la roue de commande (3) peuvent être déplacés vers l'arrière progressivement au moyen des éléments élastiques et finalement s'encliquètent de nouveau dans une position fixe.

2. Dispositif selon la revendication 1, **caractérisé en ce que** la roue de commande (3) présente un corps de base en forme de couronne annulaire, qui est réalisé dans la zone de sa périphérie extérieure et intérieure, avec un contour profilé (31 ; 32) circulaire et disposé perpendiculairement respectivement par rapport à une surface de couronne annulaire.

3. Dispositif selon la revendication 2, **caractérisé en ce que** plusieurs évidements (33) sont réalisés sur la roue de commande (3), répartis sur le contour profilé extérieur (31), dans lesquels est guidée respectivement une touche (4), où un ressort (5) est associé à cette touche (4) dans un tronçon interne en vis-à-vis du contour profilé extérieur (31), ressort qui est supporté grâce à son tronçon disposé de façon inversée sur le contour profilé intérieur (32) de la roue de commande (3).

4. Dispositif selon la revendication 3, **caractérisé en ce que** la touche (4) présente, dans la direction radiale de la roue de commande (3), deux tronçons disposés verticalement l'un par rapport à l'autre (41 ; 42) et dans la direction axiale de la roue de commande (3) deux tronçons plans (43 ; 44) espacés l'un de l'autre et s'étendant presque parallèlement au contour profilé extérieur (31) de la roue de commande, où un tronçon orienté radialement (41) est guidé dans un évidement (34) de la roue de commande (3) et où le tronçon extérieur (43) est réalisé sur toute la surface par les tronçons orientés axialement (43 ; 44), tandis que le tronçon interne (44) présente un orifice (45), dans lequel le contour extérieur du ressort (5) peut être supporté.

5. Dispositif selon la revendication 3, **caractérisé en ce qu'**une partie saillante (35), dans laquelle le contour interne du ressort (5) peut être supporté, est réalisée dans le côté interne du contour profilé intérieur (32) de la roue de commande (3) dirigé vers le contour profilé extérieur (31).

6. Dispositif selon la revendication 3, **caractérisé en ce que**, dans le boîtier (2), sont réalisés deux contours profilés (6 ; 7) sensiblement en forme de cylindre et s'étendant en direction de l'axe longitudinal du corps de cylindre (1), dans lequel le contour profilé extérieur (6) est réalisé en tant que guidage pour le contour profilé extérieur (31) de la roue de commande (3) et le contour profilé intérieur (7) est réalisé en tant que logement pour le corps de cylindre (1).

7. Dispositif selon la revendication 6, **caractérisé en ce que**, dans la zone du contour profilé intérieur (7) sont réalisés au moins deux segments (71) comportant un contour à cliper élastique, qui présente une partie saillante respective (72) sur le tronçon disposé en vis-à-vis du boîtier (2), grâce à laquelle une liaison par encliquetage entre le boîtier (2) et la roue de commande (3) peut être réalisée.

8. Dispositif selon la revendication 6, **caractérisé en ce que**, entre la surface interne du contour profilé intérieur (7) du boîtier (2) et un tourillon réalisé dans le corps de cylindre (1), se trouve une distance radiale (X), qui peut être contournée grâce au raccord à force réalisé par une touche (4).

9. Dispositif selon la revendication 2, **caractérisé en ce qu'**une mâchoire (8), à laquelle est associé un ressort (5) dans son tronçon interne en vis-à-vis du contour profilé (32), est guidée dans le côté interne du contour profilé (32) réalisé dans la périphérie intérieure de la roue de commande (3).

10. Dispositif selon la revendication 9, **caractérisé en ce que** dans le boîtier (2) est réalisé un contour profilé (9) s'étendant en direction de l'axe longitudinal du corps de cylindre (1), qui présente dans un premier tronçon un contour sensiblement coïncidant au contour associé de la mâchoire (8) et dans un second tronçon un contour sensiblement en forme de cylindre partiel, où les zones internes respectives de ces tronçons sont réalisées en tant que logement pour le corps de cylindre (1).

11. Dispositif selon la revendication 10, **caractérisé en ce que**, dans la zone du second tronçon comportant le contour sensiblement en forme de cylindre partiel, deux segments (91) sont réalisés avec un contour à cliper élastique, qui présentent, dans le tronçon disposé en vis-à-vis du boîtier (2), respectivement une partie saillante (92), grâce à laquelle une liaison par encliquetage entre le boîtier (2) et la roue de commande (3) peut être réalisée.

12. Dispositif selon la revendication 10, **caractérisé en ce que**, entre les surfaces internes des zones internes respectives du contour profilé (9) et un tourillon réalisé dans le corps de cylindre (1), se trouve un écartement radial (X), qui peut être contourné par un raccord à force réalisé par la roue de commande (3) par l'intermédiaire de la mâchoire (8).

13. Dispositif selon la revendication 9, **caractérisé en ce que** le boîtier (2) présente sur la surface latérale associée à la roue de commande (3) une butée (23), qui limite le déplacement maximal possible du contour profilé (32) réalisé sur la périphérie interne de la roue de commande (3).

14. Dispositif selon la revendication 9, **caractérisé en ce que** sur la surface latérale associée à la roue de commande (3) du corps de cylindre (1) sont réalisés plusieurs orifices (11), dans lesquels la roue de commande (3) peut être supportée grâce à des parties saillantes en forme de tourillons.

15. Dispositif selon la revendication 14, **caractérisé en ce que** les orifices (11) sont réalisés sous la forme de trous allongés dans un plan s'étendant perpendiculairement à l'axe longitudinal du corps de cylindre (1).

16. Dispositif selon la revendication 1, **caractérisé en ce que** la roue de commande (3) présente un corps de base en forme de couronne annulaire, qui est réalisé dans la zone de sa périphérie extérieure avec un contour profilé (31) circulaire et disposé perpendiculairement par rapport à la surface de la couronne annulaire, où un disque d'adaptation (10) est supporté dans le côté interne associé au boîtier (2) de la roue de commande (3).

17. Dispositif selon la revendication 16, **caractérisé en ce que** la liaison entre la roue de commande (3) et le disque d'adaptation (10) est réalisée au moyen de parties saillantes en forme de tourillons (16) et d'orifices associés (12) de sorte que la position relative entre la roue de commande (3) et le disque d'adaptation (10) peut être modifiée de façon peu importante.

18. Dispositif selon la revendication 16, **caractérisé en ce que** dans le disque d'adaptation (10) est réalisé un évitement en forme d'arc de cercle (13), qui se trouve en interaction avec une traverse (14), qui est guidée avec une partie saillante (15) dans cet évitement (13) et avec un tronçon plan dans une coulisse (24) réalisée dans le boîtier (2).

19. Dispositif selon la revendication 18, **caractérisé en ce que** l'évidement en forme d'arc de cercle (13) présente une partie saillante de blocage respective à ses deux tronçons terminaux.

20. Dispositif selon la revendication 18, **caractérisé en ce que** le tronçon plan de la traverse (14) peut être relié à un tourillon du corps de cylindre (1) avec interposition d'un ressort (5).

21. Dispositif selon l'une quelconque des revendications précédentes, **caractérisé en ce que** la roue de commande (3) et le corps de cylindre (1) pouvant être amené en interaction avec celle-ci peuvent être fixés en position dans quatre positions respectives.

22. Dispositif selon l'une des revendications précédentes, **caractérisé en ce que** le dispositif est associé à une buse d'aération et/ou un tableau de commande et/ou un système de dépôt multifonction.
